# FASCICULE DE BREVET EUROPEEN

(11) **EP 2 300 685 B1**
(45) Date de publication et mention de la délivrance du brevet: **02.11.2011**
(21) Numéro de dépôt: 09754051.2
(22) Date de dépôt: 27.03.2009
(51) Int. Cl.: F01D 5/30

(54) **ROTOR DE SOUFFLANTE POUR UNE TURBOMACHINE**
TURBOMASCHINEN-FANROTOR
TURBOMACHINE FAN ROTOR

(30) Priorité: 29.05.2008 FR 0802925
(43) Date de publication de la demande: 30.03.2011
(73) Titulaire: SNECMA, 75724 Paris Cedex 15 (FR)
(72) Inventeur: MILLIER, Xavier, Louis, Barthélèmy, F-77720 Saint Mery (FR); SERVANT, Régis, Eugène, Henri, F-91270 Vigneux sur Seine (FR); VERSEUX, Philippe, F-91210 Draveil (FR)
(74) Mandataire: Ramey, Daniel
(86) Numéro de dépôt international: PCT/FR2009/000347
(87) Numéro de publication internationale: WO 2009/144401

(56) Documents cités:
- EP-A- 1 114 916
- EP-A- 1 400 698
- FR-A- 2 733 791
- FR-A- 2 841 933

## Description

La présente demande concerne un rotor de soufflante pour une turbomachine telle qu'un turboréacteur ou un turbopropulseur d'avion.

Une soufflante de turbomachine comporte un disque portant à sa périphérie externe des aubes dont les pieds sont engagés dans des rainures sensiblement axiales de la périphérie externe du disque. Les aubes sont maintenues radialement sur le disque par coopération de formes de leurs pieds avec les rainures du disque, les pieds d'aube étant par exemple du type en queue d'aronde.

Une cale est interposée entre le pied de chaque aube et le fond de la rainure correspondante du disque pour immobiliser radialement l'aube dans la rainure et comporte à son extrémité amont un becquet qui s'étend radialement vers l'extérieur et qui présente une face radiale aval qui forme un appui axial d'une face radiale amont du pied d'aube pour retenir l'aube axialement vers l'amont. Les cales assurent une même position axiale des aubes sur le disque pour éviter la création d'un balourd et sont susceptibles de s'appuyer axialement sur un flasque annulaire fixé sur l'extrémité amont du disque.

Dans le cas heureusement peu fréquent de la perte ou de la rupture d'une aube de soufflante, cette aube est projetée sur une aube adjacente qui est alors soumise à un effort axial vers l'amont très violent, cet effort étant transmis au flasque amont par la cale correspondante. Cette cale vient en appui axial sur le flasque qui est conçu pour se déformer élastiquement afin d'amortir une partie de cet effort et ainsi éviter la perte des autres aubes de soufflante. Des moyens de retenue axiale des aubes vers l'amont, sont en outre montés sur le disque, en aval des aubes, pour reprendre une partie de cet effort axial lorsque la déformation du flasque atteint un certain seuil.

Dans la technique actuelle décrite par exemple claim le document Ep 1114916 A1, le becquet de chaque cale est conçu pour transmettre tout l'effort axial précité au flasque amont et est soumis à des forces de cisaillement importantes en direction axiale pendant la transmission de cet effort. Il est donc nécessaire de surdimensionner le becquet en direction axiale pour qu'il puisse résister à ces forces, ce qui se traduit par un encombrement axial important de chaque becquet, et une augmentation de la masse du rotor de la soufflante.

Pour compenser le surdimensionnement en direction axiale du becquet d'une cale, il est possible de rogner d'autant l'extrémité amont du pied d'aube correspondant. Cependant, cette solution n'est pas satisfaisante car dans ce cas le pied d'aube a une dimension axiale plus courte que celle de la rainure du disque et vient exercer des forces de contact importantes dans les parois latérales de la rainure qui peuvent entraîner une usure prématurée de celles-ci.

L'invention a notamment pour but d'apporter une solution simple, efficace et économique au problème précité de la technique antérieure, grâce à des moyens de retenue axiale des aubes de soufflante qui sont plus efficaces, moins encombrants et plus légers que ceux de la technique antérieure.

Elle propose à cet effet un rotor de soufflante pour une turbomachine, comprenant un disque portant des aubes dont les pieds sont engagés dans des rainures sensiblement axiales de la périphérie externe du disque, et des cales qui sont chacune interposée entre le fond d'une rainure du disque et un pied d'aube correspondant, l'extrémité amont de chaque cale étant destinée à s'appliquer sur un flasque de rétention solidaire du disque et comportant un becquet s'étendant radialement vers l'extérieur et destiné à retenir l'extrémité amont du pied d'aube, **caractérisé en ce que** le becquet de chaque cale comporte une face aval de butée sur laquelle, s'appuie l'extrémité amont du pied d'aube en cas d'effort violent, cette face aval de butée étant oblique par rapport à l'axe de rotation du rotor.

En cas de perte ou de rupture d'une aube de soufflante, l'aube adjacente à l'aube perdue ou cassée est poussée violemment vers l'amont et vient appuyer par l'extrémité amont de son pied sur le becquet de la cale qui est déplacée vers l'amont jusqu'à venir en butée sur le flasque. Pour continuer d'avancer, l'aube devrait monter sur le becquet de la cale en glissant sur la face oblique de celle-ci. Cependant, l'aube est déjà en appui par son pied sur les parois de la rainure du disque et elle ne peut pas se déplacer radialement vers l'extérieur. La face oblique du becquet de la cale crée ainsi un effet de coin, ce qui va charger l'appui déjà existant entre le pied d'aube et les parois de la rainure du disque. Ce chargement supplémentaire permet d'absorber, par frottement entre le pied d'aube et les parois de la rainure du disque, une partie de l'effort axial exercé sur l'aube. Le reste de l'effort axial est transmis par la cale et le flasque amont au disque de rotor.

L'invention permet donc de réduire les forces de cisaillement appliquées sur le becquet de la cale en cas de perte d'une aube de soufflante. Ceci permet de réduire la dimension axiale et donc l'encombrement du becquet de chaque cale, ce qui se traduit par un allègement des cales et de l'ensemble du rotor de la soufflante. Dans un cas particulier, on a par exemple constaté un gain en masse de 600-700g sur un module de soufflante complet, soit un peu moins de 1 % de la masse de ce module.

Comme dans la technique antérieure, la cale sur laquelle pousse l'aube soumise à l'effort axial précité vient en appui sur le flasque qui se déforme pour amortir cet effort axial. Le fait de diminuer l'effort axial exercé sur la cale et donc sur le flasque permet au flasque d'amortir la quasi-totalité de cet effort, et d'envisager la suppression des moyens de retenue axiale des aubes montés sur le disque, en aval des aubes.

La face aval: de butée du becquet peut former un angle α compris entre 10 et 80°, et par exemple entre 20 et 70° environ, avec l'axe du rotor. Dans un cas particulier, on a constaté que l'effort axial transmis au becquet de la cale représente seulement 75% de la charge initiale lorsque α est égal à 60°, et 50% de cette charge lorsque α est égal à 45°.

Selon une autre caractéristique de l'invention, la face aval de butée du becquet est située en regard d'une face amont du pied d'aube qui s'étend également de manière oblique par rapport à l'axe de rotation du rotor et qui est sensiblement parallèle à la face aval oblique du becquet. La face oblique du pied d'aube est destinée à s'appliquer sur la face oblique du becquet de la cale.

A l'état sans contrainte, les faces obliques en regard du becquet et du pied d'aube sont avantageusement inclinées l'une par rapport à l'autre d'un angle inférieur à 10°, et par exemple compris entre 2 et 5° environ, cet angle ayant tendance à s'annuler par déformation élastique du becquet en cas d'effort violent sur l'aube. Dans cet état, les faces obliques en regard du becquet et du pied d'aube sont de plus préférentiellement espacées l'une de l'autre. En fonctionnement normal de la soufflante, les faces obliques du pied d'aube et de la cale sont ainsi séparées par un faible jeu. Lors de la perte ou de la rupture d'une aube de soufflante, ce jeu est destiné à disparaître et les faces obliques précitées sont destinées à venir en appui l'une sur l'autre. Lors de l'appui du pied d'aube sur le becquet de la cale, ce becquet est destiné à se déformer de façon à ce que sa face oblique devienne parallèle à la face oblique correspondante du pied d'aube, qui s'applique alors sur toute la surface de la face oblique du becquet.

Le becquet comporte à son extrémité radialement externe une face radiale aval de positionnement axial de l'extrémité amont du pied d'aube à l'état sans contrainte. En fonctionnement normal, le pied d'aube est donc en appui axial sur l'extrémité radialement externe du becquet et les faces obliques du becquet et du pied d'aube sont maintenues espacées l'une de l'autre par cet appui. Lors de la perte d'une aube, le pied d'aube exerce une poussée axiale sur l'extrémité du becquet qui se déforme jusqu'à ce que les faces obliques en regard du becquet et du pied d'aube viennent en appui l'une sur l'autre.

La face radiale aval du becquet est de préférence reliée à la face oblique de ce becquet par une gorge transversale destinée à faciliter une déformation élastique du becquet lors de la rupture ou de la perte d'une aube. La gorge peut avoir en section une forme arrondie concave. Cette gorge transversale peut en outre former une zone de faiblesse du becquet destinée à fragiliser la partie radialement externe du becquet qui peut alors se séparer du reste du becquet lorsque l'effort axial transmis par l'aube atteint un certain seuil.

La face oblique du becquet et/ou la face oblique du pied d'aube peuvent être lisses. En variante, des rainures ou dentures sont formées sur la face oblique du becquet et/ou la face oblique du pied d'aube et sont destinées à absorber une énergie supplémentaire par frottement et par écrasement lorsque ces faces obliques viennent en appui l'une contre l'autre.

L'invention concerne également une turbomachine, telle qu'un turboréacteur ou un turbopropulseur d'avion, **caractérisée en ce qu'**elle comprend un rotor de soufflante tel que décrit ci-dessus.

L'invention concerne enfin une cale de pied d'aube pour un rotor de soufflante du type précité, **caractérisée en ce qu'**elle comprend à une extrémité un becquet comportant deux faces d'appui du pied d'aube, formées par une première face radiale de positionnement du pied d'aube et par une seconde face oblique de retenue du pied d'aube. Ces deux faces sont reliées entre elles par une gorge transversale ayant en section une forme arrondie concave.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1; est une demi-vue schématique partielle en coupe axiale d'un rotor de soufflante d'une turbomachine selon la technique antérieure,
- la figure 2 est une demi-vue schématique partielle en coupe axiale d'un rotor de soufflante d'une turbomachine selon la présente invention,
- la figure 3 est une vue à plus grande échelle d'une partie de la figure 2.

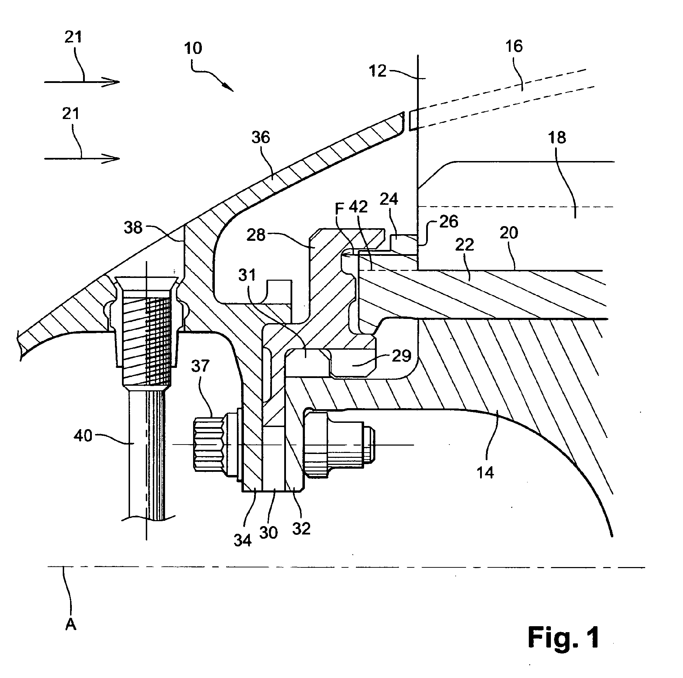

On se réfère d'abord à la figure 1 qui représente un rotor de soufflante 10 d'une turbomachine selon la technique antérieure à la présente invention.

Le rotor de soufflante 10 comprend des aubes 12 portées par un disque 14 et entre lesquelles sont intercalées des plates-formes inter-aubes 16, le disque 14 étant fixé à l'extrémité amont d'un arbre non représenté de la turbomachine.

Chaque aube de soufflante 12 comprend une pale raccordée à son extrémité radialement interne à un pied 18 qui est engagé dans une rainure 20 sensiblement axiale de forme complémentaire du disque 14 permettant de retenir radialement cette aube sur le disque.

Les plates-formes inter-aubes 16 forment une paroi qui délimite intérieurement la veine du flux d'air 21 entrant dans la turbomachine, et comprennent des moyens qui coopèrent avec des moyens correspondants prévus sur le disque 14, entre les rainures 20, pour fixer les plates-formes sur le disque.

Une cale 22 est interposée entre le pied 18 de chaque aube et le fond de la rainure 20 correspondante du disque pour immobiliser radialement l'aube dans la rainure. Chaque cale 22 est formée d'une barre allongée portant à son extrémité amont un becquet 24 qui s'étend radialement vers l'extérieur.

Le becquet 24 comporte une face radiale aval 26 qui est, en position de montage représentée en figure 1, en appui axial sur une face radiale de l'extrémité amont du pied d'aube 18 pour retenir l'aube axialement vers l'amont sur le disque 14 et pour définir une position axiale précise de cette aube sur le disque.

Un flasque annulaire 28 est fixé coaxialement sur l'extrémité amont du disques 14, la périphérie externe de ce flasque 28 s'étendant en amont des becquets des cales 22, à une faible distance axiale de ceux-ci. Le flasque 28 est retenu sur le disque 14 par des dents de crabot 29 qui engagent des dents de crabot 31 du disque, le flasque 28 comportant de plus à sa périphérie interne une bride annulaire 30 qui est intercalée entre une bride annulaire amont 32 du disque 14 et une bride annulaire interne 34 d'un capot 36 agencé en amont du disque 14 et des aubes 10. Les brides 30, 32 et 34 comprennent des orifices axiaux de passage de vis 37 ou analogues pour le serrage des brides entre elles.

Le capot 36 a une forme sensiblement tronconique s'évasant vers l'aval, la paroi définie par les plates-formes inter-aubes 16 s'étendant dans le prolongement axial de ce capot. Ce capot 36 comporte des perçages radiaux 38 pour le montage de masselottes d'équilibrage 40.

Lors de la perte d'une aube de soufflante 12, cette aube est projetée sur une aube de soufflante adjacente qui est alors soumise à un effort axial vers l'amont très violent, cet effort étant transmis au flasque amont 28 par la cale 22 associée à cette aube. Le pied 18 de l'aube soumise à cet effort axial vient d'abord appuyer axialement sur la face 26 du becquet 24 de la cale (flèche F), le becquet 24 venant à son tour en appui axial sur le flasque 28 qui se déforme élastiquement afin d'amortir une partie de l'effort axial précité. Des moyens de retenue axiale des aubes 12 sur le disque sont en outre montés en aval sur le disque.

Lors de la transmission de l'effort axial précité, le becquet 24 de la cale est soumis à des forces de cisaillement importantes dans un plan schématiquement représenté par les traits en pointillés 42. Pour résister à ces forces de cisaillement, le becquet 24 est surdimensionné en direction axiale, ce qui entraîne des inconvénients en termes d'encombrement et de masse.

L'invention permet de remédier à ces inconvénients grâce à une face oblique prévue sur le becquet et sur laquelle le pied d'aube est destiné à venir en appui cette face oblique créant un effet de coin qui va augmenter les forces de frottement et d'appui du pied d'aube sur les parois latérales de la rainure du disque et ainsi absorber une partie du choc: résultant de la perte ou de la rupture d'une aube de soufflante.

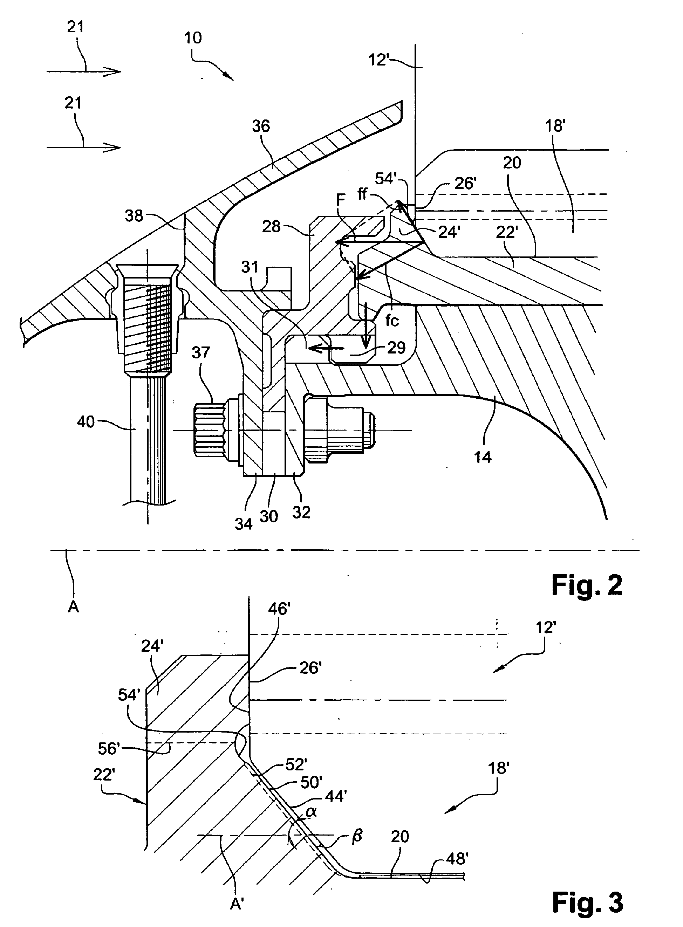

Dans le mode de réalisation des figures 2 et 3, le disque 14, le flasque 28 et le capot 36 sont identiques à ceux de la figure 1.

L'aube 12' diffère de celle de la figure 1 en ce que son pied 18 comporte à son extrémité amont une face 44' d'appui sur le becquet 24' de la cale 22', cette face 44' s'étendant de manière oblique par rapport à l'axe A de la soufflante, comme cela sera vu plus en détail dans ce qui suit. Cette face oblique 44' est formée à l'extrémité radialement interne du pied d'aube et relie la face radiale amont 46' de ce pied à sa face longitudinale 48' radialement interne.

La face radiale amont 46' du pied d'aube 18' est, en position de montage et à l'état sans contrainte représenté dans les dessins, en appui axial sur une face radiale aval 26' prévue sur une partie d'extrémité radialement externe du becquet 24', et assure un positionnement axial précis du pied d'aube sur le disque 14.

Le becquet 24' comporte en outre, radialement à l'intérieur de la face radiale 46', une face 50' située en regard de la face 44' du pied d'aube et destinée à coopérer par appui avec cette face 44' en cas de perte ou de rupture d'une aube de soufflante 12'. Cette face 50' s'étend de manière oblique par rapport à l'axe longitudinal A de la soufflante et est sensiblement parallèle à la face oblique 44' du pied d'aube.

L'angle α formé entre la face oblique 50' du becquet et l'axe de la soufflante est compris entre 10 et 80°, et de préférence entre 20 et 70°. Il est de 40-50° environ dans l'exemple représenté.

A l'état sans contrainte représenté dans les dessins, les faces obliques 44', 50' du pied d'aube et du becquet forment entre elles un angle β inférieur à 10°, et de préférence compris entre 2 et 5° environ. Les faces 44', 50' divergent l'une de l'autre vers l'aval.

Des dentures ou rainures 52' ou des irrégularités"dè surface peuvent être formées sur la face oblique 50' du becquet, comme cela sera expliqué dans ce qui suit.

La face oblique 50' du becquet est reliée à la face radiale 26' de ce becquet par une gorge transversale 54'. Cette gorge transversale a en section une forme arrondie concave dans l'exemple représenté.

Cette gorge 54' facilite une déformation élastique du becquet 24' vers l'amont lors de l'appui axial du pied d'aube sur la face radiale 26' du becquet, par flexion du becquet au niveau de la gorge 54'. La gorge 54' forme d'autre part des moyens d'affaiblissement et de fragilisation du becquet 24' de sorte que la partie radialement externe du becquet puisse se rompre lorsque l'effort axial transmis par la cale atteint un certain seuil. Les traits en pointillés 56' représentent schématiquement le plan de rupture de la partie radialement externe du becquet 24'.

Lorsque la perte d'une aube de soufflante intervient, l'aube adjacente 12' est poussée axialement vers l'amont et applique un effort axial important sur l'extrémité radialement externe du becquet 24' qui se déforme élastiquement jusqu'à un certain seuil et permet au pied d'aube 18' de venir en appui par sa face oblique 44' sur la face oblique 50' du becquet jusqu'à ce que les deux faces obliques 44' et 50' soient parallèles entre elles et appliquées l'une sur l'autre sur toute leur étendue. Une partie du choc auquel est soumis l'aube 12 (flèche F) est absorbée par l'appui et le frottement du pied d'aube sur les parois latérales de la rainure 20 du disque (flèche f_{f}). Le reste de l'effort axial est transmis par le becquet 24' de la cale au flasque 28 qui le transmet à son tour au disque 14 par les dents de crabot 29 et 31, le becquet 24' étant soumis à des forces de cisaillement (flèche f_{c}) qui sont moins importantes que celles de la figure 1. Les rainures 52' ou irrégularités de surface permettent d'absorber une partie supplémentaire de l'énergie du choc par frottement et écrasement lors de l'appui de la face oblique 44 du pied d'aube sur la face oblique 50 de la cale.

L'invention permet d'alléger les becquets 24' des cales par rapport à la technique antérieure car les forces de cisaillement auxquels ils sont soumis en cas de perte d'aube sont beaucoup moins importantes que dans la technique antérieure. Elle permet en outre de supprimer les moyens de retenue axiale montés en aval des aubes et donc de réduire de manière significative la masse de la soufflante.

## Revendications

1. Rotor de soufflante pour une turbomachine, comprenant un disque (14) portant des aubes (12') dont les pieds (18') sont engagés dans des rainures (20) sensiblement axiales de la périphérie externe du disque, et des cales (22') qui sont chacune interposée entre le fond d'une rainure du disque et un pied d'aube correspondant, l'extrémité amont de chaque cale étant destinée à s'appliquer sur un flasque de rétention (28) solidaire du disque et comportant un becquet (24') s'étendant radialement vers l'extérieur et destiné à retenir l'extrémité amont du pied d'aube, le becquet de chaque cale comportant une face aval (50') de butée sur laquelle s'appuie l'extrémité amont du pied d'aube en cas d'effort violent **caractérisé en ce que** cette face aval de butée est oblique par rapport à l'axe (A) de rotation du rotor.

2. Rotor selon la revendication 1, **caractérisé en ce que** la face aval de butée (50') du becquet (24') forme un angle (α) compris entre 10 et 80°, et par exemple entre 20 et 70° environ, avec l'axe (A) du rotor.

3. Rotor selon la revendication 1 ou 2, **caractérisé en ce que** la face aval de butée (50') du becquet (24') est située en regard d'une face amont (44') du pied d'aube (18') qui s'étend également de manière oblique par rapport à l'axe (A) de rotation du rotor et qui est sensiblement parallèle à la face aval oblique du becquet.

4. Rotor selon la revendication 3, **caractérisé en ce que**, à l'état sans contrainte, les faces obliques (44', 50') en regard du becquet (24') et du pied d'aube (18') sont inclinées l'une par rapport à l'autre d'un angle (β) inférieur à 10°, et par exemple compris entre 2 et 5° environ, cet angle ayant tendance à s'annuler par déformation élastique du becquet en cas d'effort violent sur l'aube.

5. Rotor selon l'une des revendications précédentes; **caractérisé en ce que** le becquet (24') comporte à son extrémité radialement externe une face radiale aval (26') de positionnement axial de l'extrémité amont du pied d'aube (18').

6. Rotor selon la revendication 5, **caractérisé en ce que**, à l'état sans contrainte, les faces obliques (44', 50') en regard du becquet (24') et du pied d'aube (18') sont maintenues espacées l'une de l'autre par l'appui du pied d'aube sur la face radiale aval (26') du becquet.

7. Rotor selon la revendication 5 ou 6, **caractérisé en ce que** la face radiale aval (26') du becquet (24') est reliée à la face oblique (50') de ce becquet par une gorge transversale (54') destinée à faciliter une déformation élastique de la partie radialement externe du becquet vers l'amont.

8. Rotor selon la revendication 7, **caractérisé en ce que** la gorge (54') a en section une forme arrondie concave.

9. Rotor selon l'une des revendications précédentes, **caractérisé en ce que** la face oblique (50') du becquet (24') est lisse.

10. Rotor selon l'une des revendications 1 à 8, **caractérisé en ce que** des rainures (52') ou dentures sont formées sur la face oblique (50') du becquet (24').

11. Turbomachine, telle qu'une turboréacteur ou un turbopropulseur d'avion, **caractérisée en ce qu'**elle comprend un rotor de soufflante (10) selon l'une des revendications 1 à 10.

12. Cale de pied d'aube pour un rotor de soufflante selon l'une des revendications 1 à 10, **caractérisée en ce qu'**elle comprend à une extrémité amont un becquet (24') comportant deux faces aval d'appui du pied d'aube, formées par une première face radiale (26') d'appui et de positionnement du pied d'aube et par une seconde face oblique (50') d'appui et de retenue du pied d'aube.

13. Cale selon la revendication 12, **caractérisée en ce que** les faces radiale et oblique (26', 50') sont reliées entre elles par une gorge transversale (54') ayant en section une forme arrondie concave.

## Claims

1. A turbomachine fan rotor comprising a disk (14) carrying blades (12') having roots (18') that are engaged in substantially axial grooves (20) in the outer periphery of the disk, and spacers (22'), each interposed between the bottom of a groove in the disk and the corresponding blade root, the upstream end of each spacer being designed to bear against a retaining cheekplate (28) secured to the disk, and including a nib (24') extending radially outwards and designed to retain the upstream end of the blade root, the nib of each spacer having a downstream abutment face (50') against which the upstream end of the blade root bears in the event of a violent force, the rotor being **characterized in that** this downstream abutment face is oblique relative to the axis (A) of rotation of the rotor.

2. A rotor according to claim 1, **characterized in that** the downstream abutment face (50') of the nib (24') forms an angle (α) lying in the range 10° to 80°, e.g. in the range 20° to 70° approximately, relative to the axis (A) of the rotor.

3. A rotor according to claim 1 or claim 2, **characterized in that** the downstream abutment face (50') of the nib (24') is situated facing an upstream face (44') of the blade root (18') that also extends obliquely relative to the axis (A) of rotation of the rotor and that is substantially parallel to the oblique downstream face of the nib.

4. A rotor according to claim 3, **characterized in that**, in the unstressed state, the facing oblique faces (44', 50') of the nib (24') and of the blade root (18') are inclined relative to each other by an angle (β) of less than 10°, e.g. lying in the range 2° to 5° approximately, this angle tending to disappear by elastic deformation of the nib in the event of a violent force being applied to the blade.

5. A rotor according to any preceding claim, **characterized in that** the nib (24') includes at its radially outer end a downstream radial face (26') for axially positioning the upstream end of the blade root (18').

6. A rotor according to claim 5, **characterized in that**, in the unstressed state, the facing oblique faces (44', 50') of the nib (24') and of the blade root (18') are kept spaced apart from each other by the blade root bearing against the downstream radial face (26') of the nib.

7. A rotor according to claim 5 or claim 6, **characterized in that** the downstream radial face (26') of the nib (24') is connected to the oblique face (50') of said nib via a transverse groove (54') designed to facilitate elastic deformation of the radially outer portion of the nib in an upstream direction.

8. A rotor according to claim 7, **characterized in that** the groove (54') has a section of concave rounded shape.

9. A rotor according to any preceding claim, **characterized in that** the oblique face (50') of the nib (24') is smooth.

10. A rotor according to any one of claims 1 to 8, **characterized in that** grooves (52') or teeth are formed on the oblique face (50') of the nib (24').

11. A turbomachine such as an airplane turboprop or turbojet, the turbomachine being **characterized in that** it includes a fan rotor (10) according to any one of claims 1 to 10.

12. A blade root spacer for a fan rotor according to any one of claims 1 to 10, the spacer being **characterized in that** it includes at one upstream end a nib (24') having two downstream faces for bearing against the blade root, which faces are formed by a first face (26') that is radial for bearing against and positioning the blade root, and by a second face (50') that is oblique for bearing against and retaining the blade root.

13. A spacer according to claim 12, **characterized in that** the radial and oblique faces (26', 50') are connected to each other via a transverse groove (54') having a section of concave rounded shape.

## Patentansprüche

1. Gebläserotor für eine Turbo- bzw. Strömungsmaschine, enthaltend eine Tragscheibe (14), die Schaufeln (12') trägt, deren Schaufelfüße (18') in im wesentlichen axial verlaufende Nuten (20) des Außenumfangs der Scheibe eingreifen, sowie Haltekeile (22'), die jeweils zwischen dem Nutgrund einer Nut der Scheibe und einem entsprechenden Schaufelfuß eingefügt sind, wobei das stromaufwärtige Ende eines jeden Haltekeils dazu bestimmt ist, sich an einen fest mit der Scheibe verbundenen Rückhalteflansch (28) anzulegen und einen Vorsprung (24`) aufweist, der sich radial nach außen erstreckt und dazu bestimmt ist, das stromaufwärtige Ende des Schaufelfußes zurückzuhalten, wobei der Vorsprung eines jeden Haltekeils eine stromabwärtige Anschlagsfläche (50') aufweist, an die sich das stromaufwärtige Ende des Schaufelsfußes bei heftiger Beanspruchung abstützt, **dadurch gekennzeichnet, dass** diese stromabwärtige Anschlagsfläche schräg zur Rotationsachse (A) des Rotors verläuft.

2. Rotor nach Anspruch 1, **dadurch gekennzeichnet, dass** die stromabwärtige Anschlagsfläche (50') des Vorsprungs (24') mit der Achse (A) des Rotors einen Winkel (α) einschließt, der zwischen 10 und 80° und beispielsweise zwischen etwa 20 und 70° liegt.

3. Rotor nach Anspruch 1 oder 2, **dadurch gekennzeichnet, dass** die stromabwärtige Anschlagsfläche (50') des Vorsprungs (24') einer stromaufwärtigen Fläche (44') des Schaufelfußes (18') gegenüberliegt, die sich auch schräg zur Rotationsachse (A) des Rotors erstreckt und im wesentlichen parallel zur stromabwärtigen Schrägfläche des Vorsprungs verläuft.

4. Rotor nach Anspruch 3, **dadurch gekennzeichnet, dass** im nicht beanspruchten Zustand die gegenüberliegenden Schrägflächen (44', 50') des Vorsprungs (24') und des Schaufelfußes (18') mit einem Winkel (β), der unter 10° und beispielsweise zwischen 2 und 5° liegt, geneigt zueinander verlaufen, wobei dieser Winkel durch elastische Verformung des Vorsprungs im Falle einer heftigen Beanspruchung der Schaufel gegen null tendiert.

5. Rotor nach einem der vorangehenden Ansprüche, **dadurch gekennzeichnet, dass** der Vorsprung (24') an seinem radial äußeren Ende eine stromabwärtige radiale Fläche (26') zur axialen Positionierung des stromaufwärtigen Endes des Schaufelfußes (18') aufweist.

6. Rotor nach Anspruch 5, **dadurch gekennzeichnet, dass** im nicht beanspruchten Zustand die gegenüberliegenden Schrägflächen (44', 50') des Vorsprungs (24') und des Schaufelfußes (18`) durch Abstützung des Schaufelfußes an der stromabwärtigen radialen Fläche (26') des Vorsprungs voneinander beabstandet gehalten werden.

7. Rotor nach Anspruch 5 oder 6, **dadurch gekennzeichnet, dass** die stromabwärtige radiale Fläche (26') des Vorsprungs (24') über eine quer verlaufende Rille (54') mit der Schrägfläche (50') dieses Vorsprungs verbunden ist, welche Rille dazu bestimmt ist, eine elastische Verformung des radial äußeren Abschnitts des Vorsprungs in Richtung stromaufwärts zu erleichtern.

8. Rotor nach Anspruch 7, **dadurch gekennzeichnet, dass** die Rille (54') im Querschnitt eine konkav abgerundete Form hat.

9. Rotor nach einem der vorangehenden Ansprüche, **dadurch gekennzeichnet, dass** die Schrägfläche (50') des Vorsprungs (24') glatt ausgeführt ist.

10. Rotor nach einem der Ansprüche 1 bis 8, **dadurch gekennzeichnet, dass** an der Schrägfläche (50') des Vorsprungs (24') Nuten (52') bzw. Zahnungen ausgebildet sind.

11. Turbomaschine, wie etwa Turbostrahltriebwerk bzw. Turbopropellertriebwerk für Flugzeuge, **dadurch gekennzeichnet, dass** sie einen Gebläserotor (10) nach einem der Ansprüche 1 bis 10 aufweist.

12. Haltekeil für einen Schaufelfuß eines Gebläserotors nach einem der Ansprüche 1 bis 10, **dadurch gekennzeichnet, dass** er an einem stromaufwärtigen Ende einen Vorsprung (24') mit zwei stromabwärtigen Flächen zum Abstützen des Schaufelfußes aufweist, die aus einer ersten radialen Fläche (26') zum Abstützen und Positionieren des Schaufelfußes und aus einer zweiten schräg verlaufenden Fläche (50') zum Abstützen und Festhalten des Schaufelfußes gebildet sind.

13. Haltekeil nach Anspruch 12, **dadurch gekennzeichnet, dass** die radiale und die schräg verlaufende Fläche (26', 50') über eine quer verlaufende Rille (54') miteinander verbunden sind, die im Querschnitt eine konkav abgerundete Form hat.
